**Europäisches Patentamt**

**European Patent Office**

**Office européen des brevets**

(19)

(11) Veröffentlichungsnummer: **0 110 342**
**B1**

(12) # EUROPÄISCHE PATENTSCHRIFT

(45) Veröffentlichungstag der Patentschrift:
**29.10.86**

(51) Int. Cl.⁴: **B 66 C 1/18**

(21) Anmeldenummer: **83111805.4**

(22) Anmeldetag: **25.11.83**

(54) **Band oder Schlauch, insbesondere Rundschlinge für Hebe- und Transportzwecke.**

(30) Priorität: **06.12.82 DE 8234186 U**

(43) Veröffentlichungstag der Anmeldung:
**13.06.84 Patentblatt 84/24**

(45) Bekanntmachung des Hinweises auf die Patenterteilung:
**29.10.86 Patentblatt 86/44**

(84) Benannte Vertragsstaaten:
**AT BE CH DE FR GB IT LI LU NL SE**

(56) Entgegenhaltungen:
**EP - A - 0 032 749**
**DE - A - 2 129 837**
**DE - U - 1 859 598**
**DE - U - 7 034 840**
**DE - U - 7 836 280**
**DE - U - 8 234 186**
**FR - A - 1 228 562**
**FR - A - 2 205 468**

(73) Patentinhaber: **SPANSET INTER AG, St.
Jakobs-Strasse 25, CH-4000 Basel (CH)**

(72) Erfinder: **von Danwitz, Hans-Otto, Jan van
Werth-Strasse 8, D-4044 Kaarst (DE)**

(74) Vertreter: **Tergau, Enno et al,
Hefnersplatz 3 Postfach 11 93 47,
D-8500 Nürnberg 11 (DE)**

ACTORUM AG

## Beschreibung

Die Erfindung betrifft eine Rundschlinge mit den Merkmalen des Oberbegriffes des Patentanspruches 1.

Der konstruktive Aufbau und das Herstellungsverfahren derartiger Rundschlingen sind in der Beschreibungseinleitung von EP-A 0 032 749 erläutert. Wesentlich für den Erfindungsgegenstand ist dabei das Merkmal, dass der Schutzschlauch der Rundschlinge in lediglich einem Webvorgang als textiles Schlauchgewebe hergestellt ist.

Zur Herstellung des Schutzschlauches bedarf es daher nicht noch einer zusätzlichen Naht, wie dies z.B. bei der Rundschlinge gemäss FR-A 2 205 468 der Fall ist. Der Fadenwickel wird in den derart lediglich in einem Webvorgang vorgefertigten Schutzschlauch nachträglich eingebracht bzw. eingezogen.

Für den Benutzer derartiger Rundschlingen ist es wichtig zu wissen, wie stark die Rundschlinge belastet werden darf. Bei Rundschlingen der eingangs genannten Art ist es bekannt, die maximale Belastbarkeit in geeigneten Einheiten oder Symbolen auf an den Schutzschlauch angenähte Etiketten aufzudrucken. Bei aus einem Textilgewebe bestehenden Hebebändern ist es auch bereits bekannt, die Maximallast in Form geeigneter Einheiten oder Symbole unmittelbar auf eine Flachseite des Hebebandes aufzudrucken.

Weiterhin ist es aus DE-U-1 859 598 bekannt, Etikettenbänder als Schlauchgewebe herzustellen, bei dem die erforderlichen Figur- bzw. Schrifteinwebungen mit den Figurschussspulen vorgenommen werden. Solche Etikettenbänder werden beispielsweise in Kleidungsstücke eingenäht. Der Anwendungszweck derartiger Etikettenbänder unterscheidet sich ganz wesentlich von der Zweckbestimmung des Schutzschlauches einer Rundschlinge der erfindungsgemässen Art. Die Herstellung derartiger Etikettenbänder als Schlauchgewebe hat nur den ästhetischen Zweck, die unansehnliche und für die gewünschten Informationszwecke ungeeignete Rückseite der Figur- bzw. Schrifteinwebungen durch die untere Gewebelage des Schlauchgewebes abzudecken.

Bei Rundschlingen der eingangs genannten Art haben die auf angenähte Etiketten aufgedruckten Schriftzeichen oder Symbole den Nachteil, schlecht leserlich zu sein, weil die Grösse der Etiketten beschränkt ist und diese nicht immer deutlich im Blickfeld des Handhabers liegen. Ausserdem werden die Etiketten im rauhen Betrieb leicht abgerissen oder ihre Beschriftung durch mechanische Einflüsse unleserlich. Sie haben genauso wie die auf bekannte Hebebänder aufgedruckten oder aufgeschriebenen Symbole den Nachteil, im rauhen Alltagsbetrieb schnell zu verblassen, zu verschmutzen oder sonstwie unleserlich zu werden. Bei schlechten Lichtverhältnissen sind sie überhaupt nicht zu erkennen. Der Erfindung liegt daher die Aufgabe zugrunde, Rundschlingen der eingangs genannten Art in einfacher Weise dadurch zu verbessern, dass die angegebenen Informationen dauerhaft lesbar und auch unter schlechten Lichtverhältnissen oder unter im rauhen Alltagsbetrieb unvermeidlichen Verschmutzungen des Bandes auf Dauer erkennbar bleiben. Diese Aufgabe wird durch die Kennzeichnungsmerkmale des Patentanspruches 1 gelöst.

Durch das erhabene Vorstehen der Kettfäden des Schlauchgewebes aus der Aussenseite der Schlauchgewebeoberfläche wird erreicht, dass die Symbole nicht nur lesbar, sondern auch tastbar sind. Ist die Rundschlinge, also der Schutzschlauch verschmutzt, so kann der Schmutz leicht durch in Längsrichtung der Rundschlinge erfolgendes Abwischen so weit entfernt werden, dass die erhaben vorstehenden Figur-Kettfäden wieder deutlich erkennbar bzw. ertastbar sind. Das in solchen Fällen rein instinktiv in Längsrichtung der Rundschlinge erfolgende Abwischen ist schnell und ergonomisch vorteilhaft durchführbar. Sich im Umfeld der erhaben vorstehenden Figur-Kettfäden ansammelnder, die Lesbarkeit beeinträchtigender Schmutz lässt sich in dieser Weise besonders wirksam entfernen, was der schnellen Wiederherstellung des Farbkontrastes zwischen den erhaben vorstehenden Figur-Kettfäden und der übrigen Schlauchgewebeoberfläche dienlich ist. Die Verwendung von erhaben aus der Schlauchgewebeoberfläche vorstehenden Kettfäden als Figurfäden trägt weiterhin dem Umstand Rechnung, dass Rundschlingen der erfindungsgemässen Art bei ihrer zweckentsprechenden Verwendung laufend unter Zugspannung in ihrer Längsrichtung über scharfe Kanten oder Ecken gezogen werden. Die aus der Schlauchgewebeoberfläche vorstehenden Figur-Kettfäden gleiten dabei in ihrer Längsrichtung über die Kanten oder Ecken, ohne sich dahinter verhaken zu können und einer Reissgefahr ausgesetzt zu werden. Dies alles ist darüber hinaus ohne einen zusätzlichen Arbeitsgang, nämlich ein nach der Herstellung des Rundschlauches etwa notwendiges Bedrucken, möglich. Wie der Schutzschlauch der eingangs genannten, vorbekannten Rundschlinge gemäss EP-A 0 032 749 wird der Schutzschlauch für die erfindungsgemässe Rundschlinge lediglich durch seinen Webvorgang mit den Figurketten hergestellt.

Durch die Verwendung von in der Spinnmasse gefärbtem Kunststoff für die Figur-Kettfäden gemäss Patentanspruch 2 wird weiterhin vermieden, dass durch im rauhen Alltagsbetrieb unvermeidbaren Abrieb der erhaben aus der Schlauchgewebeoberfläche vorstehenden Kettfäden die aufgebrachten Symbole bzw. die Figur unkenntlich werden. Im Gegenteil bewirkt ein solcher Verschleiss-Abrieb an der Oberfläche des erhaben vorstehenden Teiles der Kettfäden eine laufende Wiederherstellung ihrer zur Farbe des übrigen Schlauchgewebes kontrastierenden Ausgangsfarbe und damit gewissermassen zu einer selbsttätigen Regenerierung der Lesbarkeit der aufgewebten Figur bzw. der bei Rundschlingen aus Sicherheitsgründen so besonders wichtigen Maximallastangabe.

Durch das Kennzeichnungsmerkmal des Patentanspruches 3 können die einzelnen Symbole, beispielsweise die Maximallastangaben, in grösseren Abständen voneinander in besonders auffälliger Weise angeordnet werden, ohne dass die im Schlauchinnern parallel zum Schlauchgewebe verlaufenden, von aussen unsichtbaren Kettfäden stören. Dies erleichtert auch den Webvorgang, da das Einweben der Kettfäden nur im Figurbereich vorgenommen zu werden braucht.

Der konstruktive Aufbau des Schutzschlauches einer erfindungsgemässen Rundschlinge wird an Hand der Zeichnung beispielsweise erläutert. Darin zeigen:

Fig. 1 eine perspektivische Darstellung eines Abschnittes des Schutzschlauches einer Rundschlinge mit erhaben über dessen Aussenseite vorstehenden Figur-Kettfäden,

Fig. 2 eine Draufsicht auf den Schlauchabschnitt gemäss Fig. 1.

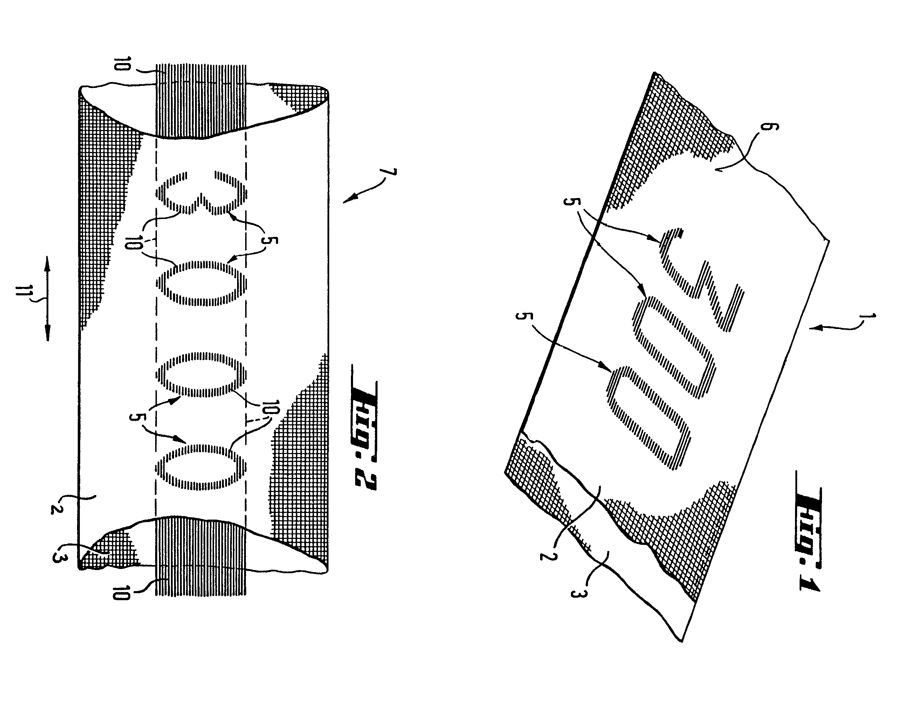

Der Schutzschlauch ist als Ganzes mit 1 bezeichnet. Er besteht aus einem lediglich in einem Webvorgang ohne nachträgliches Anbringen einer Naht hergestellten Schlauchgewebe mit der Gewebe-Oberlage 2 und der Gewebe-Unterlage 3. Die Symbole 5, also die bei Hebeschlingen aus Sicherheitsgründen besonders wichtige Gewebefigur, sind als in Schlauchlängsrichtung 11 verlaufende, über die Aussenseite der Schlauchgewebeoberfläche 6 erhaben vorstehende Kettfäden 10 in das Schlauchgewebe eingewebt. Diese Kettfäden 11 weisen eine zur Farbe des Schlauchgewebes kontrastierende Farbe auf. Die Kettfäden 10 verlaufen im Bereich ausserhalb der Symbole 5 bzw. der von aussen sichtbaren Gewebefigur im zwischen Unterlage 3 und Oberlage 2 gebildeten Schlauchinnenraum von den Schussfäden des Schlauchgewebes ungebunden parallel zum Schlauchgewebe.

## Patentansprüche

1. Rundschlinge für Hebe- und Transportzwecke mit einem den zur Traglastaufnahme bestimmten Fadenwickel umgebenden Schutzschlauch (7) aus textilem Schlauchgewebe, auf welchem z.B. die maximale Belastbarkeit der Rundschlinge angebende Symbole (5), Zahlen od. dgl. angeordnet sind, dadurch gekennzeichnet, dass die Symbole (5) als in Schlauchlängsrichtung (11) verlaufende, über die Aussenseite der Schlauchgewebeoberfläche (6) erhaben vorstehende Kettfäden (10) des Schlauchgewebes eingewebt sind, die eine zur Farbe des Schlauchgewebes kontrastierende Farbe aufweisen.

2. Rundschlinge nach Anspruch 1, dadurch gekennzeichnet, dass die kontrastierend zur Farbe des Schlauchgewebes eingefärbten Kettfäden (10) spinngefärbte (spin dyed/coloured) Kunststoffäden sind.

3. Rundschlinge nach Anspruch 1 oder 2, dadurch gekennzeichnet, dass die Kettfäden (10) ausserhalb der Symbole (5) im Schlauchinnern von dem Schlauchgewebe ungebunden parallel zum Schlauchgewebe verlaufen.

## Claims

1. Round sling for lifting and transporting purposes with a protective tubing (7) of textile tubing fabric surrounding a skein of threads for carrying the load, on which tubing symbols (5), numbers or the like are provided which indicate for example the maximum load to be carried by the round sling, characterised in that the symbols (5) are woven in as warp threads (10) of the tubing fabric extending in the longitudinal direction (11) of the tubing and projecting in a raised manner beyond the exterior of the tubing surface (6), which warp threads have a colour which contrasts with the colour of the tubing fabric.

2. Round sling according to Claim 1, characterised in that the warp threads (10) dyed in contrast to the colour of the tubing fabric are spin-dyed plastic threads.

3. Round sling according to Claim 1 or 2, characterised in that outside the symbols (5), the warp threads (10) extend in the interior of the tubing, are not bound into the tubing fabric and extend parallel to the tubing fabric.

## Revendications

1. Elingue pour le levage et le transport, comportant un manchon de protection (7), en tissu tubulaire textile, qui entoure une nappe de fils prévus pour reprendre la charge et sur lequel sont disposés des symboles (5), des chiffres ou analogues qui indiquent par exemple la charge maximale de l'élingue, caractérisée en ce que les symboles (5) sont tissés sous forme de fils de chaine (10) du tissu tubulaire qui courent dans la direction longitudinale du manchon (11), qui viennent en saillie en relief au-dessus de la face extérieure de la surface du tissus tubulaire (6) et qui présentent une couleur faisant contraste avec la couleur du tissu tubulaire.

2. Elingue selon la revendication 1, caractérisée en ce que les fils de chaine (10) colorés en faisant contraste avec la couleur du tissu tubulaire sont des fils synthétique colorés à la filature (spin dyed/coloured).

3. Elingue selon la revendication 1 ou 2, caractérisée en ce que les fils de chaine (10) en dehors des symboles (5), courent à l'intérieur du tube, parallèlement au tissu tubulaire et non liés par le tissu tubulaire.

**Fig. 1**

**Fig. 2**